Europäisches Patentamt

European Patent Office

Office européen des brevets

(11) Publication number: **0 390 008**
**A2**

# EUROPEAN PATENT APPLICATION

(21) Application number: **90105670.5**

(22) Date of filing: **26.03.90**

(51) Int. Cl.⁵ **H04B 5/00**

(30) Priority: **28.03.89 SE 8901054**

(43) Date of publication of application:
**03.10.90 Bulletin 90/40**

(84) Designated Contracting States:
**AT DE FR GB IT**

(71) Applicant: **TÖRNBLOMS KVALITETSKONTROLL AB**

**S-725 90 Västeras(SE)**

(72) Inventor: **Törnblom, Bengt Hjalmar,**
**Vikhus Rytterne**
**S-725 92 Västeras(SE)**

(74) Representative: **Boecker, Joachim, Dr.-Ing.**
**Rathenauplatz 2-8**
**D-6000 Frankfurt a.M. 1(DE)**

(54) **Device for testing and/or measuring a test object.**

(57) Device for testing and/or measuring a test object with a signal transmission being arranged between a movable transducer/sensor (1) and stationarily located equipment, for example an electric cabinet. The transducer is in the form of a carriage or placed on/in a carriage which moves, for example backwards and forwards across a test object (2). By mounting a conductor (16) in parallel with the path of movement of the transducer and allowing this stationary conductor to constitute a winding on a transformer ring-core (13), placed on the carriage and thus being movable along the conductor (16), signals can be transmitted without galvanic signal connection between the carriage and, for example, stationary equipment. A consequence of this signal transmission is that the transducer (1) can move as a so-called shuttle across, for example, a hot steel strand (2) with no other means of driving than its own kinetic energy, which may, for example, be supplied by means of compressed air impulses when the transducer is positioned outside near the edges of the steel strand. The signal transmission can advantageously be made bidirectional, and one field of application is the so-called eddy current testing, in which the signal transmission problem often constitutes a greatly limiting factor. In simplified terms the signal transmission device can be regarded as a transformer with a movable winding, in its simplest embodiment.

FIG. 7

## Device for testing and/or measuring a test object

The invention relates to a device for testing and/or measuring a a test object according to the precharacterising part of claim 1. The invention is well suited for use within the field of eddy current testing, in which the signal transmission often presents a problem because of high transducer speeds and a hot and awkward environment.

The prior art often entails the transmission of signals to and from a transducer via a galvanic connection, that is, via cables and the like. SE-A-85 00 065 and SE-A-85 03 894 describe devices for signal transmission to rotating transducers.

It should be pointed out here that the concept "transducer" is intended to comprise transducers and sensors of widely differing kinds. All variants of transducers and sensors are thus included in the concept "transducer". Neither is the invention limited to applications with circular surface scanning paths. It is also applicable for other movement patterns of a transducer such as a reciprocating movement, for example running backwards and forwards across a steel blank, or along curved scanning paths other than circular-ones.

The invention aims at developing a device for testing and/or measuring a test object, for example a steel strand, which device enables a transducer with a small movable mass to move quickly across the surface of the test object. To make this possible, a simple and light signal transmission arrangement is required, which does not involve fatigue problems and the like. In addition, the transmission arrangement should be robust and resistant to the environment.

To achieve this aim the invention suggests a device for testing and/or measuring a test object according to the introductory part of claim 1, which is characterized by the features of the characterizing part of claim 1.

Further developments of the invention are characterized by the features of the additional claims.

The following description is only to be regarded as a feasible example of how the invention can be realized and applied. The description will be delivered with reference to the accompanying drawings which illustrate one of the many feasible embodiments of the invention. The drawings show in

Figures 1 and 2 a cross section of a hot steel strand 2 as well as a transducer manipulator with an associated transducer 1,

Figure 3 a side view of the manipulator and the strand and the mounting of the manipulator by means of an arms 10,

Figure 4 a cross section of the manipulator,

Figure 5 an embodiment with the transducer 1 mounted by means of a water-cooled arrangement 3,

Figure 6 in more detail how parts in Figure 5 can be arranged.

Figures 7 and 8 the arrangement of an inductive signal transmission.

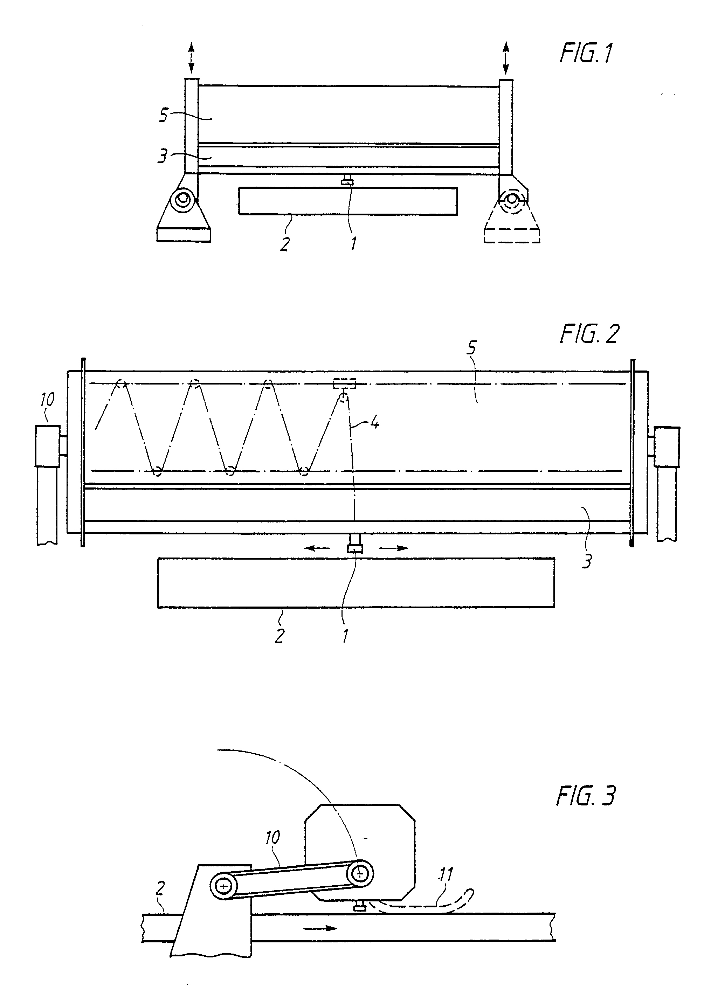

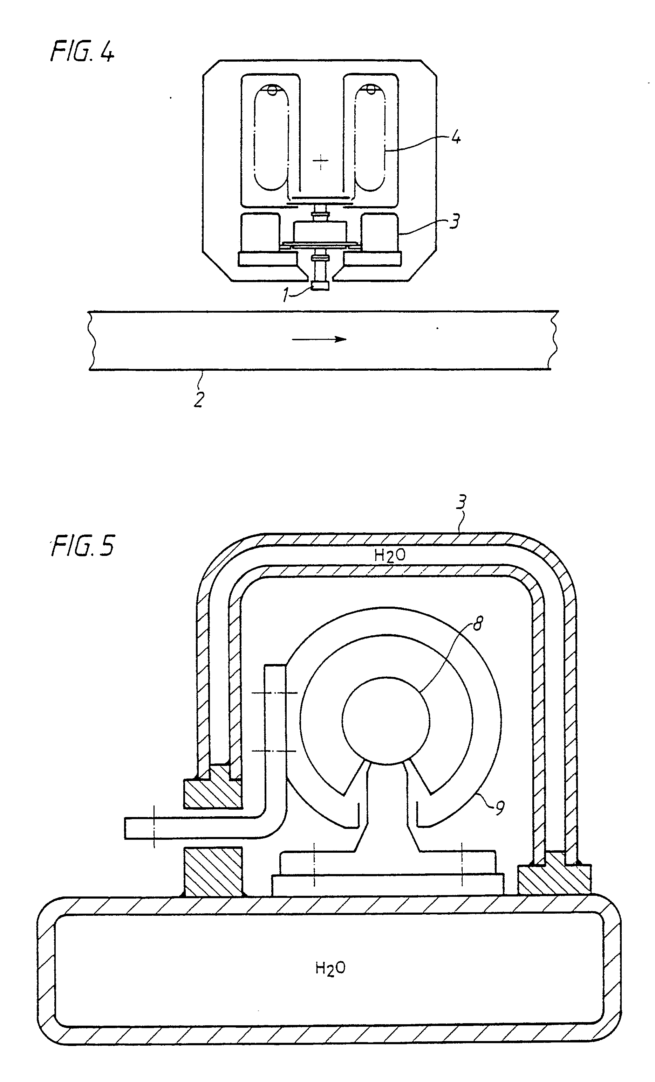

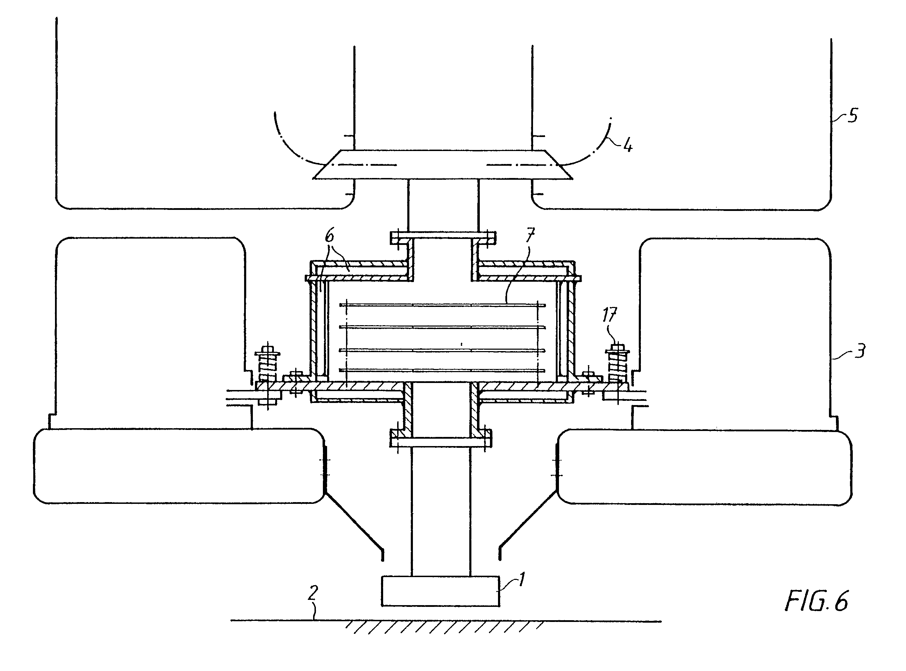

The task of the manipulator is to move the transducer 1 across the surface of the test object 2. The transducer 1 is mounted as a carriage or on/in a carriage. By means of a flexible coupling 17 (Figure 6), the carriage is journalled in, for example, radial ball bushings 9 and a shaft 8, thus making it movable backwards and forwards across the surface of the test object 2. Bearings and shafts, rails are built into a water-cooled radiation protective device 3 (Figure 5), which at the same time serves as supporting structure. In addition to transducer and bearings, Figures 1 and 2 show, for example, the arrangement of cables 4 for the supply of current inside a shielded and cooled channel 5. Figure 1 also shows how the manipulator can be raised and lowered by means of simple eccentric bearings.

Figure 3 shows another method of allowing the manipulator to become self-adjusting in the vertical direction by means of support wheels of support runners 11.

Figure 4 hardly requires any comments, but it may be mentioned that a cooling water hose has been disposed in one channel and electric cables in the other. It is, of course, also possible to use an articulated arm and to accommodate the cables and the hose inside the arm.

By enclosing the bearings of the carriage/transducer, which also includes any wheels and the like, in a cooled space and only allowing a bracket to protrude into a gap, as shown in Figure 5, a very robust and reliable design is obtained.

Figure 6 shows how the transducer/carriage is mounted between the supporting rails housed in the device 3. Adjacent to the actual transducer 1, certain electronic equipment 7 has been placed. Also the electronic equipment is protected by double-walled, water-filled walls 6. As will be clear, the transducer 1 is thus well protected, both mechanically and from heat radiation from the hot strand 2, which may have a temperature of 900° C. The electronic equipment may be of the electronic adaptation equipment-type.

By placing the transducer/carriage between two shafts, the carriage will have a high stability and will be able to carry large loads, for example transducer arrangements according to SE-A-85 03 894-1, SE-A-85 05 541-6 and SE-A-87 00 472-7.

Thus far we have an easily movable transducer which, with low friction, is able to move rapidly, for example across the direction of movement of a strand to be tested. However, the arrangement of the cable, designated 4 in the Figures, presents a problem. A loose hanging cable tends to be subjected to mechanical fatigue and also gives rise to electrical disturbances when using, for example, high frequencies in connection with eddy currents. A water hose of, for example, polyurethane is considerably more resistant and easy to lay.

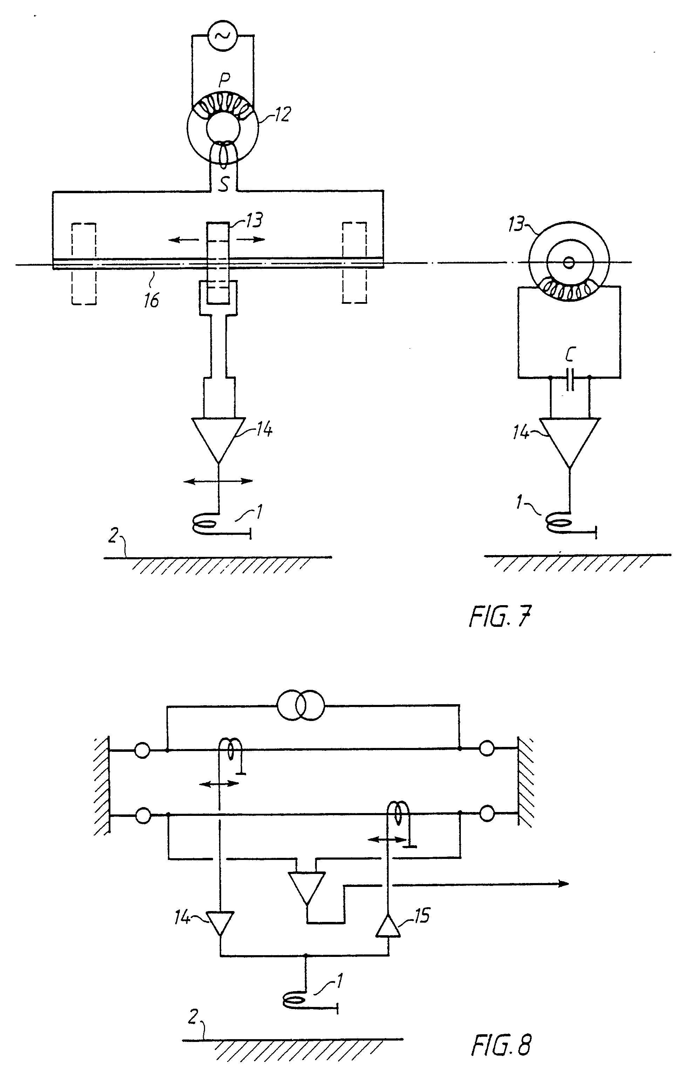

One way of mastering the signal transmission to the fast moving carriage is to use an inductive transmission of the type shown in principle in Figures 7 and 8. A transformer 12 is equipped with a high impedance primary winding P and a low-ohmic secondary winding S. The signal to be transmitted to the transducer 1 is symbolized by an alternating voltage generator, connected to the primary winding P.

The very low-ohmic secondary winding is connected to a relatively thick conductor 16, which extends in parallel with the path of movement of the transducer carriage 1. The conductor 16 will carry a relatively heavy current, proportional to the signal to be transferred to the transducer 1 and/or the electronic equipment 7. An annular ferrite core 13 is mounted around conductor 16 and fixed to the transducer/carriage 1. In other words, the ferrite core 13 accompanies the transducer in its movement. As is clear, conductor 16 serves as primary winding to the ferrite core 13. As secondary winding, the ferrite core 13 carries a multi-turn winding which is connected to the amplifier 14, which, for example, supplies the transducer 1. To obtain a satisfactory signal level of the secondary winding of the ferrite core 13, the secondary winding should be tuned to resonate with, for example, a capacitor C (Figure 7) connected in parallel to said winding. The length of the conductor 16 is adapted to the maximum range of movement of the transducer/carriage 1.

Figure 7 thus shows the basic principle of how the signal transmission can be arranged. Figure 8 shows how the principle can be further developed and become bidirectional by, for example, doubling the arrangement. Figure 8 can also be seen as a typical eddy current configuration, suited for use in combination with the methods and devices disclosed in SE-A-75 07 857, SE-A-83 02 738, SE-A-84 00 698, SE-A-86 01 785, SE-A-87 00 472 and SE-A-87 01 082.

As to the problem of how to drive the transducer in its motion, it is to appreciate that any mechanical driving arrangement across a hot strand is subjected to great stresses. One way to deal with this problem is to allowed the movable transducer to pass as a shuttle across the test object.

An elegant solution in this connection is to push away the transducer, by means of compressed air, at the turns of the transducer in its outer positions and then, when the transducer/carriage has gathered sufficient kinetic energy, allow the transducer to move by itself across the surface of the strand and be braked in a corresponding way by means of air at the opposite edge of the strand. In this way, the need for chains and belts and the like across the strand is completely eliminated. What remains for the transducer/carriage to carry with it is the cooling water hose. By draining off the water flow from the device 3, for example right across the strand, the length of the hose or tube can be minimized. In those cases where electronic equipment 7 is required adjacent to the transducer 1, it will be necessary to have either a battery, which can be placed on the carriage, or external current supply. The latter can be obtained by means of, for example, the shafts/rails 8 and the bearings 9. It is, of course, possible to use the shafts 8 as conductor, 16, in the signal transmission.

The performance of the signal transmission may in certain applications be raised if one transmission is reserved for each frequency used, for example for each other carrier frequency in connection with eddy current testing.

The figures show an application where the path of movement is straight. However, there is nothing preventing the application from having a curved scanning path.

The signal transmission may, for example, be mounted inside the device 3, thus being well protected against external damage. By the direction of movement is meant here, in most cases, the direction of movement of the carriage. The transducer may have superimposed movements which allow the transducer instantaneously to have a deviating direction of movement, which is of no interest in this connection.

The invention makes possible and comprises the following features:
- The transducer moves across the test object with no means of propulsion other than its kinetic energy.
- The signal transmission is performed in a contactless manner by means of inductive coupling.
- The current supply is performed by means of the wheels and/or bearings/bearing guides of the carriage.
- The cooling water is transferred by means of a flexible hose disposed in an articulated tubular arm extending from the centre line of the strand.
- The device is self-adjusting as regards the distance of the transducer to the surface of the test object, by means of a device supporting against the surface of the test object.
- Kinetic energy is transmitted to the carriage/transducer by means of impulses, for example compressed air impulses.

The invention can be varied in many ways within the scope of the appended claims.

Claims

1. Device for testing and/or measuring a test object, such as monitoring the test object, for example a hot steel strand, with respect to a quantity, such as surface cracks, which device comprises at least one transducer/sensor (1) which is movable relative to the test object, **characterized** in that at least one conductor (16), oriented along the entire direction of movement and/or the main direction of movement of the transducer/sensor, is arranged, for example as a sub-device, for inductive transmission of signals to and/or from the movably arranged transducer/sensor (1) and/or associated electronic equipment (7).

2. Device according to claim 1, **characterized** in that the movable transducer sensor (1) consists of an eddy-current based surface transducer.

3. Device according to claim 1 or 2, **characterized** in that the transducer/sensor is designed as a movable carriage and/or is mounted on a movable carriage and that said carriage moves across the test object (2) as a shuttle completely or partially by its own kinetic energy, and that kinetic energy is transmitted to the carriage/shuttle via impulses, for example, compressed air impulses administered near the end and/or turning points of the path of movement.

4. Device according to any of the preceding claims, **characterized** in that at least one inductive signal transmission comprises at least one ferrite core (13) which surrounds a conductor (16) extending in the direction of movement of the transducer/sensor.

5. Device according to any of the preceding claims, **characterized** in that the inductive transmission, or a part thereof, is tuned to resonate with, for example, a so-called carrier frequency.

6. Device according to any of the preceding claims, **characterized** in that one inductive transmission is provided per carrier frequency.

7. Device according to any of the preceding claims, **characterized** in that a mobile carriage moves along a conductor (8), for example a shaft, rail, guide, or the like, and that said conductor (8) is completely or partially surrounded by a water-cooled thermal shield (3).

8. Device according to any of the preceding claims, **characterized** in that the supply of current and/or voltage and/or the supply of signals are/is performed by means of the bearing of the carriage/shuttle, for example by means of the flexible axles (8).

9. Device according to any of the preceding claims, **characterized** in that the carriage/shuttle is placed between two supporting axles (8) or the like.

10. Device according to any of the preceding claims, **characterized** in that the distance of the transducer to the surface of the test object is adjusted by means of an eccentric device.

*FIG.1*

*FIG. 2*

*FIG. 3*

FIG. 4

FIG. 5

H2O

H2O

FIG.6

FIG. 7

FIG. 8